# EUROPEAN PATENT SPECIFICATION

(11) **EP 1 900 181 B1**
(45) Date of publication and mention of the grant of the patent: **06.11.2013**
(21) Application number: 06767565.2
(22) Date of filing: 22.06.2006
(51) Int. Cl.: H04M 1/02, G09F 19/16, G02B 27/22, G02B 17/00, G09F 13/12

(54) **MULTIPLE REFLECTION PANEL**
MEHRFACH-REFLEXIONSTAFEL
PANNEAU MULTIREFLECHISSANT

(30) Priority: 28.06.2005 JP 2005188631
(43) Date of publication of application: 19.03.2008
(73) Proprietor: NISSHA PRINTING CO., LTD., Nakagyo-ku Kyoto-shi Kyoto 604-8551 (JP)
(72) Inventor: YOSHIKAWA, Kumiko c/o NISSHA PRINTING CO., LTD., Kyoto-shi, Kyoto 604-8551 (JP); HIROBE, Nobuyasu c/o NISSHA PRINTING CO., LTD., Kyoto-shi, Kyoto 604-8551 (JP)
(74) Representative: Lemcke, Brommer & Partner
(86) International application number: PCT/JP2006/312948
(87) International publication number: WO 2007/001038

(56) References cited:
- DE-C- 659 703
- FR-A- 2 477 977
- FR-A1- 2 305 310
- US-A- 2 114 711
- US-A- 4 663 869

## Description

### Technical Field

The present invention relates to a multiple reflection panel that can be used as a panel for providing a decorative function to various display plates or exterior plates of various articles. More particularly, the present invention relates to a multiple reflection panel that can provide an entertainment value to an electrical apparatus such as a mobile phone while allowing the contents of a display of an information display portion to be visible when the multiple reflection panel is placed outside the information display portion of the electrical apparatus.

### Background Art

The following panel relating to the present invention has been known.

This invention relates to a display tool that is used as an ornament placed on a desk or a table, or a sign in downtown or restaurants, and displays decorative patterns such as letters or figures in a multiple manner to provide a three-dimensional feeling. In the display tool, a sheet glass that transmits light and also has a reflection effect, and a mirror with a decorative pattern are placed with a predetermined space therebetween. Thus, the decorative pattern is reflected and projected in a multiple manner between the sheet glass and the mirror to provide a strong three-dimensional feeling to an observer when the display tool is used as an ornament or a sign (see paragraphs [0002], [0025], [0046] and [0047] in Japanese Patent Laid-Open No. 2000-47613).

The conventional display tool is mainly intended for use as a sign in downtown or the like, and for multiple display of the decorative pattern, the mirror and the sheet glass need to be provided with a space of about 10 to 15 mm therebetween. Further, in view of thicknesses of the mirror and the sheet glass, a thickness of the display tool becomes about 25 to 30 mm, which makes the size of the tool relatively large.

The display tool needs to be constituted by the mirror and the sheet glass, and also a frame for securing the mirror and the sheet glass with a predetermined space therebetween. This increases the number of components of the tool, and the number of steps required for assembling the components, which limits a reduction in production costs of the display tool.

In view of the above described circumstances, the present invention has an object to provide a panel that has a simple and compact configuration and has a high visual effect of multiple reflection.
FR 2 305 310 A1 discloses a device which has an optical effect and a special material for the realisation thereof.
Further, US 2 114 711 A relates to a mirror unit of the third-dimensional type which is simple and inexpensive in construction and efficient in use.
US 4 663 869 A discloses a display for displaying images in three dimensions.
FR 2 477 977 A discloses a bright decor of mirrors.
DE 659 703 C discloses a show facility with depth from light reflections.

### Disclosure of the Invention

A multiple reflection panel according to the present invention is described in claim 1. It comprises a first membrane M1 that reflects all visible light is formed on a back surface 3a of a transparent member 3, a second membrane M2 that reflects part of visible light and transmits part of visible light is formed on at least a position facing said first membrane M1 on a front surface 3b of the transparent member 3, and wherein there is provided a subject to be reflected T constituted by an inclined surface 3c formed in at least one of a boundary between a side surface 3d of said transparent member 3 and said front surface 3b of said transparent member 3 on a peripheral edge of said transparent member 3, and a boundary between said surface 3d of said transparent member 3 and said back surface 3a of said transparent member 3 on the peripheral edge of said transparent member 3. The second membrane that reflects part of the visible light and transmits part of the visible light is a so-called half mirror.

In the multiple reflection panel of this configuration, the first membrane and the second membrane that reflect the subject to be reflected in a multiple manner are independently formed on the back surface of the transparent member and on the front surface facing the back surface, and unlike a conventional multiple reflection panel, two members are not secured by a frame. Thus, the multiple reflection panel has a simple and compact structure, can be used as an exterior panel of various articles or a display panel of various electrical apparatuses besides a sign in downtown as in the conventional technique, and has a wide range of application.

With the inclined surface as in this configuration, light applied from outside causes a difference in brightness between the side surface of the transparent member and the inclined surface. The difference in brightness reflects a plurality of times between the first membrane and the second membrane to provide a visual effect. Particularly, when the inclined surface shines with increased brightness, the multiple reflection image is clearly viewed to increase an entertainment value of the multiple reflection panel.

For example, when the inclined surface is provided in the front surface, light from outside increases the brightness of the inclined surface. This transmits through the inside of the transparent member to form a multiple reflection image between the first membrane and the second membrane. Thus, when the inclined surface is provided in the front surface, the inclined surface can shine under almost all use environments except use in dark places, which facilitates providing a visual effect of the multiple reflection panel.

On the other hand, when the inclined surface is formed in the back surface, incident light from the front surface of the multiple reflection panel is applied to the inclined surface through the inside of the transparent member.

When a light source of any kind is provided on a back side of the multiple reflection panel, light from the light source can be directly applied to the inclined surface. Thus, this configuration also allows the multiple reflection image with the inclined surface to be formed.

In the multiple reflection panel according to the present invention, said inclined surface 3c provided in said transparent member 3 is constituted by a plurality of continuous irregular surfaces 3e.

This configuration provides a more complex multiple reflection image Z to obtain a panel P with different atmosphere.

In the multiple reflection panel according to the present invention, said second membrane M2 may be formed only on a peripheral edge of said front surface 3b of said transparent member 3.

The second membrane functions as a so-called half mirror that reflects part of visible light. Thus, when an area formed with the second membrane is diagonally viewed, the contents of a display are sometimes poorly visible because of a background being reflected therein. However, the second membrane is formed only on the peripheral edge of the front surface to provide an appearance of depth at the peripheral edge while ensuring visibility at the center of the multiple reflection panel, and increase a visual effect of the multiple reflection panel.

### Brief Description of Drawings

Figure 1 shows an exemplary use of a multiple reflection panel.
Figure 2 shows a structure of the multiple reflection panel.
Figure 3 shows another exemplary use of a multiple reflection panel.
Figure 4 shows another structure of the multiple reflection panel.
Figure 5 is a partially enlarged sectional view of an embodiment of a multiple reflection panel.
Figure 6 is a partially enlarged sectional view of an embodiment of a multiple reflection panel.
Figure 7 is a partially enlarged sectional view of an embodiment of a multiple reflection panel.
Figure 8 is an exploded perspective view of a multiple reflection panel.
Figure 9 is a partially enlarged sectional view of a multiple reflection panel.
Figure 10 is a perspective view of an embodiment of a multiple reflection panel.

### Best Mode for Carrying Out the Invention

A multiple reflection panel P (hereinafter simply referred to "panel P") according to the present invention has a visual effect of reflecting a subject to be reflected in a multiple manner, and is used as a panel for providing a decorative function to various display plates or exterior plates of various articles. Particularly, the panel P can provide an entertainment value to an electrical apparatus such as a mobile phone while allowing the contents of a display of an information display portion to be visible when the panel P is placed outside the information display portion of the electrical apparatus.

Now, the panel P according to the present invention will be described with reference to the drawings.

A case is shown where the panel P is used as an exterior part of a mobile phone 1 (hereinafter simply referred to as "phone 1"). The phone 1 is used for calls or e-mail communication, and also used as a terminal for collecting and storing various information with a high frequency. The present invention is intended to increase a visual effect of an appearance of the phone 1, and provide an entertainment value to the phone 1 in use.

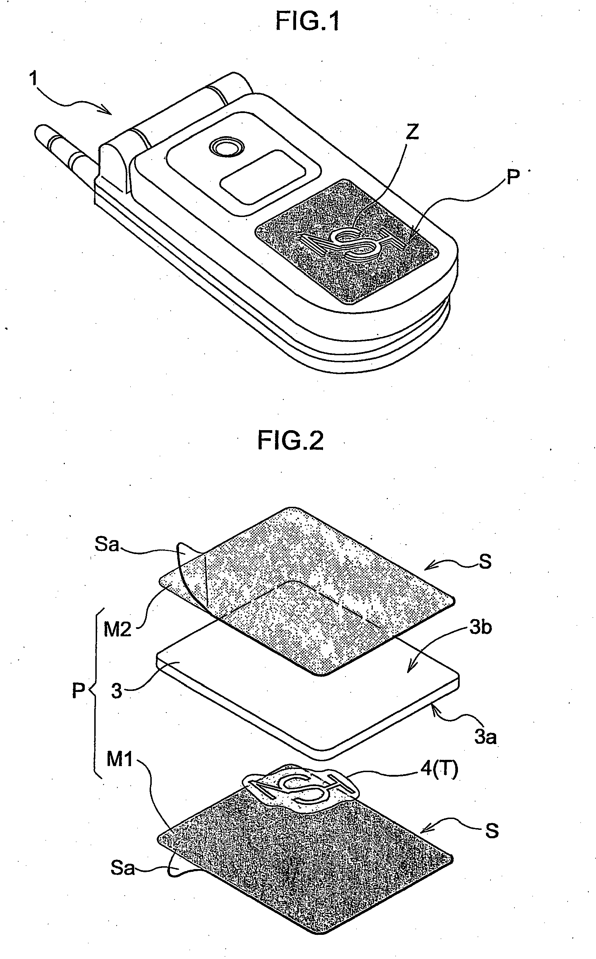

As shown in Figure 1, the panel P is provided in a lower portion of a front face of the phone 1. This portion has no camera function or clock display function, or the like, and only has a decorative function.

As shown in Figure 2, the panel P includes a transparent member 3 that forms a basic structure, and a first membrane M1 and a second membrane M2 mounted to the transparent member 3.

The first membrane M 1 has a function of reflecting all visible light, and is formed on a back surface 3a among outer surfaces of the transparent member 3. The second membrane has a function as a so-called half mirror that reflects part of visible light and transmits part of visible light, and is formed on at least a position facing the first membrane M 1 on a front surface 3b facing the back surface 3a.

Further, a subject to be reflected T that is reflected a plurality of times between the first membrane M1 and the second membrane M2, and becomes visible from the front surface 3b is provided in an area at least either on an inner portion or the outer surface of the transparent member 3. The case where the subject to be reflected T is provided on the inner portion of the transparent member 3 refers to, for example, the case where a logo 4 as the subject to be reflected T is embedded in the transparent member 3. The case where the subject to be reflected T is provided on the outer surface of the transparent member 3 refers to, for example, the case where the subject to be reflected T is affixed to the outer surface of the transparent member 3. Figure 2 shows an example in which the subject to be reflected T is provided between the transparent member 3 and the first membrane M1. The first membrane M1 may be formed on the entire back surface 3a, or may be formed on part thereof, as will be described below.

The subject to be reflected T may be provided between the second membrane M2 and the transparent member 3.

The transparent member 3 is made of, for example, resin or glass. Colored transparent material may be used as long as it can form a multiple reflection image Z.

For providing the first membrane M1, the second membrane M2, and the subject to be reflected T on the transparent member 3, for example, a transfer sheet S as shown in Figure 2 is used. Besides, of course, the membranes may be directly machined on the transparent member 3.

There is no significant difference in configuration between a transfer sheet S for providing the first membrane M1 and a transfer sheet S for providing the second membrane M2. The transfer sheet S is, for example, such that a peeling layer is coated on the entire surface of each base sheet Sa, a metal layer that constitutes the first membrane M1 or the second membrane M2 is provided in a required range, then a decorative layer to which the subject to be reflected T constituted by a desired logo 4 or pattern is applied as required is provided, and an adhesive layer is further provided on the entire surface or part thereof.

The base sheet Sa may be a sheet of resin such as polypropylene series resin, polyethylene series resin, or polyester series resin.

The peeling layer is transparent, and may be formed of acrylic series resin, vinyl series resin, urethane series resin, or the like by gravure printing, offset printing, or the like.

The metal layer that constitutes the first membrane M 1 may be formed by vapor deposition of metal such as aluminum.

The metal layer that constitutes the second membrane M2 may be formed by thin vapor deposition of metal such as aluminum.

The decorative layer may be formed of a binder of resin such as polyester series resin or acrylic series resin containing a small amount of general colorant such as pigments or dyes by gravure printing, offset printing, or the like.

The adhesive layer can be formed of resin such as acrylic series resin, vinyl series resin, or urethane series resin by gravure printing, offset printing, or the like.

These transfer sheets S are set on the transparent member 3, heat is applied to integrate the transfer sheets S and the transparent member 3, and then each base sheet Sa is peeled from the peeling layers, and thus the first membrane M1 and the second membrane M2 are transferred to the transparent member 3. When it is difficult to transfer the first membrane M1 and the second membrane M2 from both the transfer sheets S at one time, the first membrane M 1 and the second membrane M2 may be independently transferred from the transfer sheets S. The first membrane M1 and the second membrane M2 may be also transferred to the transparent member 3 by injecting resin to form the transparent member 3 in a die to which the transfer sheets S are previously mounted to integrate the transfer sheets S and the transparent member 3, and then peeling the base sheets Sa.

In forming the second membrane M2, UV cured resin such as urethane is used for the peeling layer that is finally placed on an outermost side of the front surface 3b of the transparent member 3 to provide a hard coating property to the outermost side of the front surface 3b of the transparent member 3.

An insertion sheet may be used instead of the transfer sheet S. The insertion sheet is a transfer sheet S without a peeling layer, and a base sheet Sa remains on a transparent member 3 after the transparent member 3 and the insertion sheet are integrated.

The first membrane M1 and the second membrane M2 are formed on the transparent member 3, and thus when the panel P is viewed from the front surface 3b, the logo 4 or the desired pattern appears to be reflected a plurality of times between the membranes. At this time, every time the subject to be reflected T is reflected by the second membrane M2, part of light is emitted outward, and the view of the multiple reflection image Z gradually dims, thereby obtaining a visual effect such that the panel P has an appearance of depth.

Thus, the panel P according to the present invention that can be constituted by one transparent member 3 has an extremely simple and compact structure, and is applicable to any articles as an exterior panel or the like having a visual effect of multiple reflection.

A panel P according to the present invention may be used as a member that constitutes various information display portions 2.

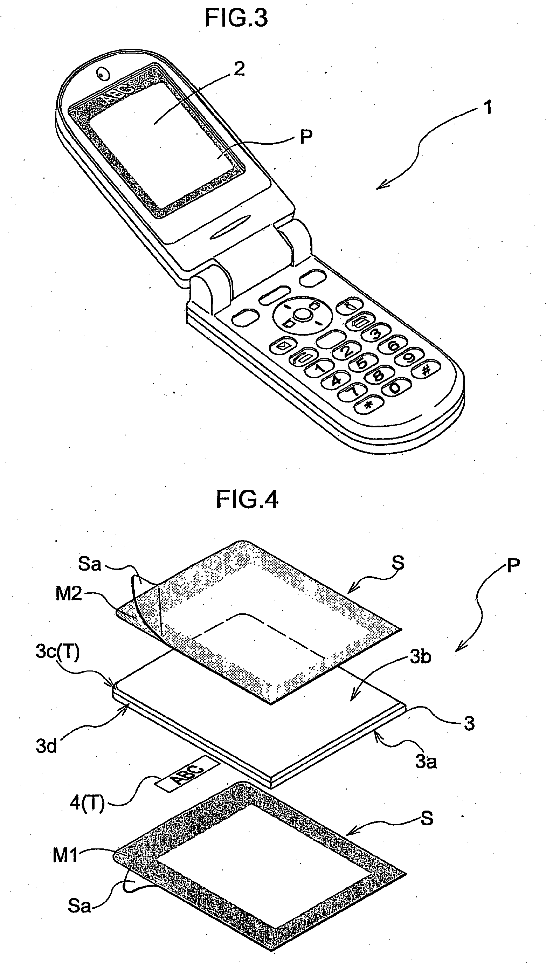

Figure 3 shows an example in which the panel P is used in an information display portion 2 of a phone 1. Figure 4 shows a basic structure of the panel P. The panel P is used as an outermost member of the information display portion 2. The transparent member 3 may be colored as long as the contents of a display on a crystal liquid are visible.

A first membrane M1 formed on a back surface 3a of the transparent member 3 is formed only on part of the back surface 3a so as to prevent loss of visibility of the information display portion 2. In this embodiment, as shown in Figures 3 and 4, the first membrane M1 is formed only on a peripheral edge of the panel P, and the center of the panel P remains transparent. The panel P in this case can be also produced by substantially the same method as in the first embodiment.

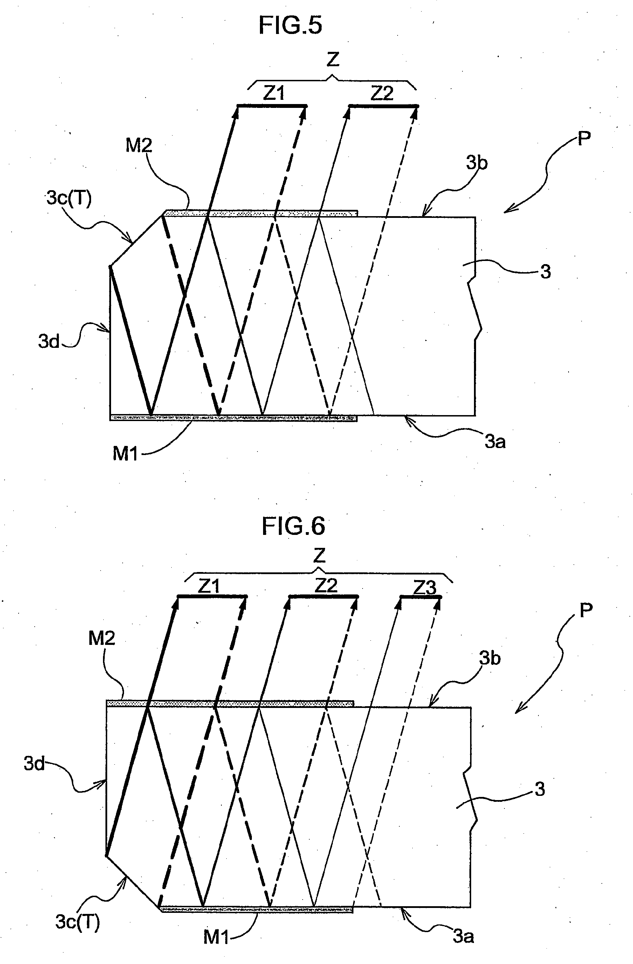

In the panel P according to the present invention, it is effective to provide, for example, an inclined surface 3c that forms a multiple reflection image Z in a peripheral edge of the transparent member 3 as shown in Figures 5 to 7 besides the logo 4 described above, as the subject to be reflected T for obtaining a visual effect.

Specifically, the inclined surface 3c is provided in a boundary between a side surface 3d and the front surface 3b of the transparent member 3 (Figure 5), or a boundary between the side surface 3d and the back surface 3a of the transparent member 3 (Figure 6). The inclined surface 3c may be provided in both of these positions.

For example, when the inclined surface 3c is provided in the front surface 3b as shown in Figure 5, light from outside increases brightness of the inclined surface 3c in use of the phone 1. This transmits through the inside of the transparent member 3 to form a multiple reflection image Z between the first membrane M1 and the second membrane M2. Specifically, an image of the inclined surface 3c is reflected by the first membrane M 1, and part of the reflected light transmits through the second membrane M2 and becomes visible as a first reflection image Z1. In the position of the second membrane M2, part of the light is reflected toward the first membrane M1, reflected by the first membrane M1, then a portion of said light part transmits through the second membrane M2, and becomes visible as a second reflection image Z2 adjacent to the first reflection image Z1. Thus, when the inclined surface 3c is provided in the front surface 3b, the inclined surface 3c can shine under almost all use environments except use in dark places, which significantly facilitates providing a visual effect of the panel P.

On the other hand, as shown in Figure 6, when the inclined surface 3c is formed in the back surface 3a, incident light from the front surface 3b of the panel P is applied to the inclined surface 3c through the inside of the transparent member 3. Thus, this configuration also allows the multiple reflection images Z (Z1 to Z3) with the inclined surface 3c to be formed. Particularly, when the inclined surface 3c is not desired to be formed in the peripheral edge of the front surface 3b of the panel P in view of appearance design of the phone 1 or the like, the inclined surface 3c is preferably formed in the back surface 3a. The inclined surface 3c is also preferably formed to have a certain degree of roughness so that light from any direction efficiently increases brightness.

The second membrane M2 may be formed on the entire surface of the transparent member 3 or part thereof unlike the first membrane M1.

If the second membrane M2 is formed on part of the transparent member 3, the second membrane M2 is formed in a position facing the first membrane M1. If the second membrane M2 is formed on the entire surface of the transparent member 3, the information display portion 2 becomes poorly visible to other persons when the information display portion 2 is diagonally viewed because of a background being easily reflected therein.

On the other hand, for example, if the second membrane M2 is formed only on the peripheral edge of the transparent member 3, and the second membrane M2 is not formed on the center, the contents of a display of the information display portion 2 becomes easily visible when the information display portion 2 is viewed from any directions because of a background being poorly reflected therein.

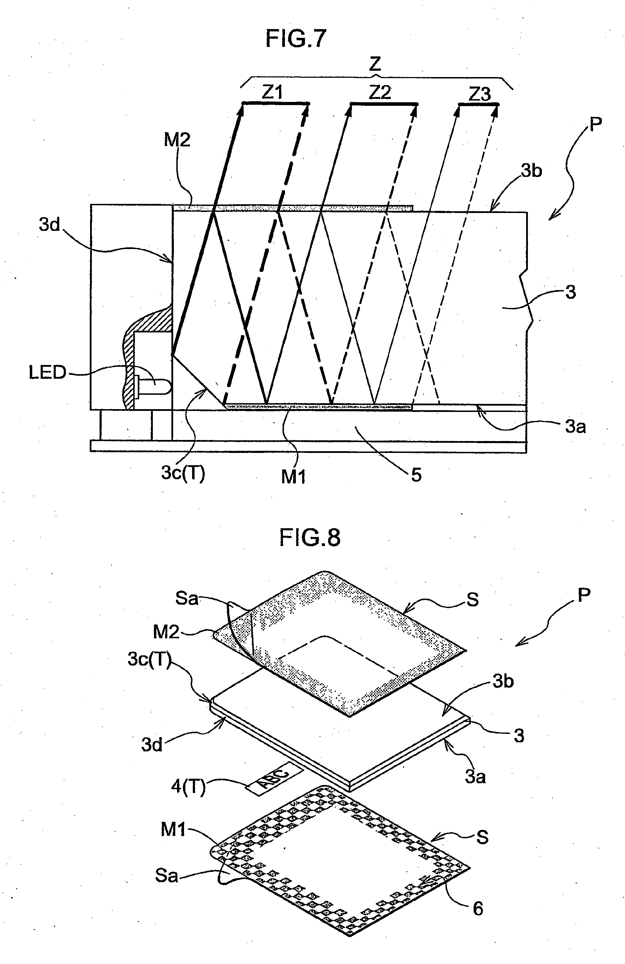

Figure 7 shows another embodiment when the inclined surface 3c is formed in the back surface 3a. Herein, an LED or a backlight 5 provided inside a mobile phone is used as illumination light of the inclined surface 3c. When such a built-in illumination light is used, the inclined surface 3c can shine regardless of places for use, even in dark places. Particularly, in places with dark surroundings, multiple reflection images Z (Z1 to Z3) formed on the panel P become clear and beautiful. Particularly, when a dedicated illumination such as an LED is provided, a desired color is selectable. Thus, this configuration provides a rich visual effect.

In the above described embodiment, the inclined surface 3c formed in the boundary between the front surface 3b and the side surface 3d forms the multiple reflection image Z. In this case, the multiple reflection image Z has, for example, a repeated linear pattern. As shown in Figure 8, however, a desired pattern 6 such as a grid pattern may be provided on the first membrane M1 to form a more complex multiple reflection image Z. This pattern 6 is constituted by, for example, areas that reflect all visible light and areas having less reflectivity than the former areas arranged in grid. The area having less reflectivity is configured as desired, for example, so that light from the backlight 5 can or cannot transmit through a front surface of the panel P. Specifically, any configuration may be adopted as long as a reflection image increases a visual effect.

The pattern 6 is not limitedly formed on the first membrane M1, but may be formed on the second membrane M2. The pattern 6 may be formed on both the first membrane M1 and the second membrane M2.

As described above, the panel P having this configuration can obtain a more complex multiple reflection image Z, and an information display portion 2 having a high entertainment value.

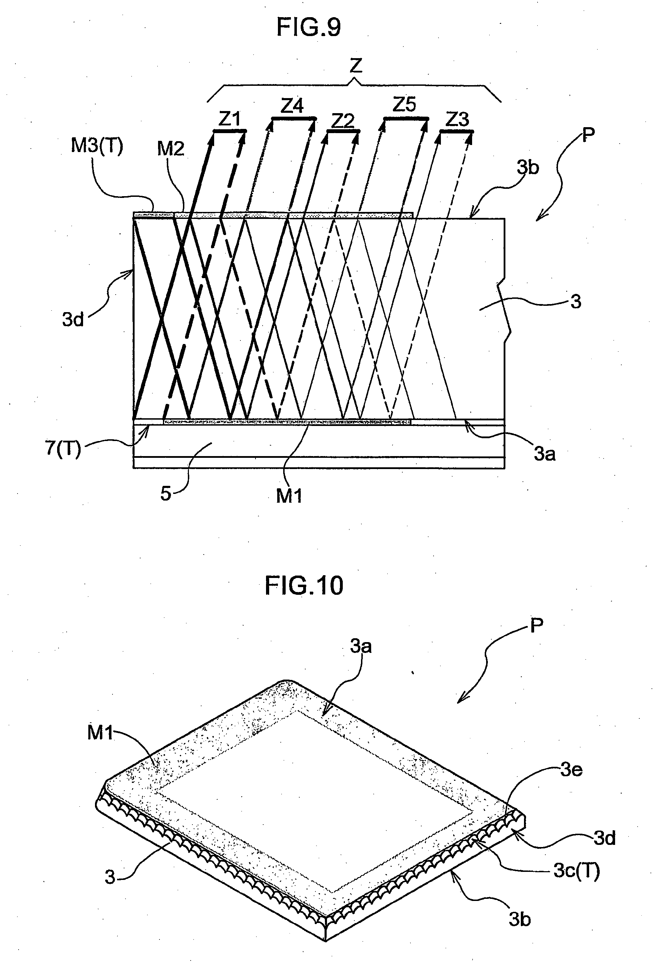

As a subject to be reflected T for forming a multiple reflection image Z, for example, a third membrane M3 may be formed on the front surface 3b as shown in Figure 9. Herein, an example is shown in which the third membrane M3 is formed in parallel with a second membrane M2. A transparent member 3 used has no inclined surface 3c as described above, and is a general plate having a front surface 3b, a back surface 3a, and a side surface 3d. A first membrane M1 the same as above described is formed on the back surface 3a except an outermost peripheral edge. The outermost peripheral edge functions as a window 7 that transmits light from a backlight 5.

On the other hand, the second membrane M2 is formed in a position substantially facing the first membrane M1 on the front surface 3b of the transparent member 3. On the outermost peripheral edge of the front surface 3b, the third membrane M3 that forms a multiple reflection image Z is formed in parallel with the second membrane M2. Besides the example in Figure 9, the third membrane M3 may be formed so as to be covered with the second membrane M2, or the third membrane M3 may be formed to cover the second membrane M2. The third membrane M3 may be a membrane of any ingredient as long as brightness thereof is increased by light from the backlight 5, or light that enters the transparent member 3 from outside and then is reflected by the first membrane M1.

This configuration allows the light from the backlight 5 entering through the window 7 to be visible from the front surface 3b of the panel P. Then, the light forms multiple reflection images Z1 to Z3 between the first membrane M1 and the second membrane M2. Further, the light entering through the window 7 is applied to the third membrane M3, and the third membrane M3 with increased brightness forms multiple reflection images Z4 and Z5.

As shown in Figure 9, a width of the window 7 and a width of the third membrane M3 are set to predetermined dimensions, and thus changing a viewing angle of the panel P allows an image to be visible in which the multiple reflection images Z1 to Z3 based on the window 7 and the multiple reflection images Z4 and Z5 based on the third membrane M3 are alternately arranged. Thus, a multiple reflection panel P with a high visual effect can be obtained.

The position formed with the third membrane M3 is not limited to the front surface 3b. For example, the third membrane M3 may be provided in parallel with the first membrane M1 of the back surface 3a. In this case, a third membrane M3 that can transmit light may be provided in a portion partially cut out into a predetermined shape in the first membrane M1 so that the light from the backlight 5 is applied to the third membrane M3, or a third membrane M3 having a desired shape and color may be provided on a front side of the first membrane M 1.

The case where the third membrane M3 is formed is not limited to the case where the first membrane M1 and the second membrane M2 are formed on the peripheral edge of the transparent member 3 as shown in Figure 9, but may be the case where the first membrane M 1 and the second membrane M2 are formed on the entire surface of the transparent member 3.

In this sense, the above described logo 4 belongs to the third membrane M3. Specifically, in addition to the first membrane M1 and the second membrane M2 that reflect images, the third membrane M3 that can form the multiple reflection image Z is formed on at least one of the front surface 3b and the back surface 3a to obtain a panel P having a visual effect with atmosphere.

In Figure 5 or Figure 6, the example has been shown in which the flat inclined surface 3c is formed in the boundary between the front surface 3b and the side surface 3d of the transparent member 3. As shown in Figure 10, however, an inclined surface 3c as a subject to be reflected T may be constituted by a plurality of continuous irregular surfaces 3e. Herein, an example is shown in which substantially cylindrical irregular surfaces 3e are formed. This configuration provides a more complex multiple reflection image Z to obtain a panel P with different atmosphere.

Such irregular surfaces 3e may be provided on any surface of the panel P. When a user likes an appearance of the irregular surfaces 3e, the irregular surfaces 3e may be formed on the front surface 3b. On the other hand, when functionality such that light from the backlight 5 is desired to be applied with higher intensity is valued rather than appearance design, the irregular surfaces 3e may be formed on the back surface 3a.

### Industrial Applicability

The multiple reflection panel P according to the present invention can be used as a panel for providing a decorative function to various display plates or exterior plates of various articles, and also used for various apparatuses such as the mobile phone 1, a portable music reproduction device, or an information display portion of a remote controller of an electrical product.

## Claims

1. A multiple reflection panel comprising:
a transparent member (3) having a back surface (3a), a front surface (3b) facing the back surface (3a), and a side surface (3d); and
a first membrane (M1) that reflects all visible light and is formed on the back surface (3a);
a second membrane (M2) that reflects part of visible light and transmits part of visible light and is formed on at least a position facing said first membrane (M1) on the front surface (3b);
wherein the transparent member (3) further comprises an inclined surface (3c) formed in at least one of a boundary between a side surface (3d) and said front surface (3b) on a peripheral edge of said transparent member (3), and a boundary between said surface (3d) and said back surface (3a) on the peripheral edge of said transparent member (3); and
a multiple reflection image (Z) formed by an image of the inclined surface (3c) provided in the transparent member (3) being projected on the first membrane (M1) and the second membrane (M2) is reflected a plurality of times between the first membrane (M1) and the second membrane (M2); and becomes visible from the front surface (3b).

2. The multiple reflection panel according to claim 1, wherein said inclined surface (3c) provided in said transparent member (3) is constituted by a plurality of continuous irregular surfaces (3e).

3. The multiple reflection panel according to claim 1, wherein said second membrane (M2) is formed only on a peripheral edge of said front surface (3b) of said transparent member (3).

## Patentansprüche

1. Multireflektierende Scheibe, umfassend:
ein transparentes Element (3), das eine Rückoberfläche (3a), eine Vorderoberfläche (3b), die der Rückoberfläche (3a) gegenüber liegt, und eine Seitenoberfläche (3d) aufweist; und
eine erste Membran (M1), die alles sichtbare Licht reflektiert und auf der Rückoberfläche (3a) ausgebildet ist;
eine zweite Membran (M2), die einen Teil des sichtbaren Lichts reflektiert und einen Teil des sichtbaren Lichts durchlässt und an mindestens einer Stelle gegenüber der ersten Membran (M1) auf der Vorderoberfläche (3b) ausgebildet ist;
wobei das transparente Element (3) ferner eine geneigte Oberfläche (3c) aufweist, die mindestens an einer Grenze zwischen einer Seitenoberfläche (3d) und der Vorderoberfläche (3b) auf einem umlaufenden Rand des transparenten Elements (3) oder einer Grenze zwischen der Oberfläche (3d) und der Rückfläche (3a) auf dem umlaufenden Rand des transparenten Elements ausgebildet ist; und
ein Multireflexionsbild (Z), das dadurch gebildet wird, dass ein Bild der geneigten Oberfläche (3c), die in dem transparenten Element (3) vorgesehen ist, auf die erste Membran (M1) und die zweite Membran (M2) projiziert wird, mehrmals zwischen der ersten Membran (M1) und der zweiten Membran (M2) reflektiert wird; und von der Vorderfläche (3b) aus sichtbar wird.

2. Multireflektierende Scheibe gemäß Anspruch 1, wobei die in dem transparenten Element (3) vorgesehene geneigte Oberfläche (3c) aus einer Vielzahl kontinuierlicher unregelmäßigen Oberflächen (3e) besteht.

3. Multireflektierende Scheibe gemäß Anspruch 1, wobei die zweite Membran (M2) nur auf einem umlaufenden Rand der Vorderoberfläche (3b) des transparenten Elements (3) ausgebildet ist.

## Revendications

1. Panneau multiréfléchissant comprenant :
un élément transparent (3) ayant une surface arrière (3a), une surface avant (3b) faisant face à la surface arrière (3a) et une surface latérale (3d) ; et
une première membrane (M1) qui réfléchit toute la lumière visible et est formée sur la surface arrière (3 a) ;
une deuxième membrane (M2) qui réfléchit une partie de la lumière visible et transmet une partie de la lumière visible et est formée à au moins une position faisant face à la première membrane (M1) sur la surface avant (3b) ;
dans lequel l'élément transparent (3) comprend en outre une surface inclinée (3c) formée à au moins une parmi une limite entre une surface latérale (3d) et ladite surface avant (3b) sur un bord périphérique dudit élément transparent (3), et une limite entre ladite surface (3d) et ladite surface arrière (3a) sur le bord périphérique dudit élément transparent (3) ; et
une image de réflexion multiple (Z) formée par une image de la surface inclinée (3c) prévue dans l'élément transparent (3) qui est projetée sur la première membrane (M1) et la deuxième membrane (M2) est réfléchie plusieurs fois entre la première membrane (M1) et la deuxième membrane (M2) et devient visible depuis la surface avant (3b).

2. Panneau multiréfléchissant selon la revendication 1, dans lequel ladite surface inclinée (3c) prévue dans ledit élément transparent (3) est constituée d'une pluralité de surfaces irrégulières continues (3e).

3. Panneau multiréfléchissant selon la revendication 1, dans lequel ladite deuxième membrane (M2) est formée seulement sur un bord périphérique de ladite surface avant (3b) dudit élément transparent (3).
